# EUROPÄISCHE PATENTSCHRIFT

(11) **EP 1 432 257 B1**
(45) Veröffentlichungstag und Bekanntmachung des Hinweises auf die Patenterteilung: **27.07.2005**
(21) Anmeldenummer: 03090407.2
(22) Anmeldetag: 26.11.2003
(51) Int. Cl.: H04Q 7/24

(54) **Verfahren und Gateway zur Bereitstellung von Verbindungen, insbesondere zwischen einem Telekommunikations-Festnetz und einem Telekommunikations-Mobilfunknetz**
Method and gateway for providing connection, specially between a fixed and a mobile telecommunication network
Procédé et passerelle permettant des connexions, spécialement entre un réseau de télécommunications fixe et un mobile

(30) Priorität: 16.12.2002 DE 10260401
(43) Veröffentlichungstag der Anmeldung: 23.06.2004
(73) Patentinhaber: Teles AG Informationstechnologien, 10587 Berlin (DE)
(72) Erfinder: Paetsch, Frank, 12357 Berlin (DE)
(74) Vertreter: Müller, Wolfram Hubertus, Dipl.-Phys.

(56) Entgegenhaltungen:
- EP-A- 0 844 797
- US-A1- 2003 081 565
- US-B1- 6 374 112

## Beschreibung

Die Erfindung betrifft ein Verfahren zur Bereitstellung von Verbindungen zwischen einem rufenden Kommunikationsgerät eines ersten Kommunikationsnetzes und einem gerufenen Kommunikationsgerät eines weiteren Kommunikationsnetzes unter Verwendung eines Gateways gemäß dem Oberbegriff des Anspruchs 1. Das Verfahren findet insbesondere Anwendung bei der Bereitstellung von Verbindungen zwischen einem Telekommunikations-Festnetz und einem Telekommunikations-Mobilfunknetz. Die Erfindung betrifft des weiteren ein Gateway, das am Übergangspunkt zwischen zwei Kommunikationsnetzen angeordnet ist.

### Hintergrund der Erfindung

Es sind so genannte Mobilfunk-Gateways bekannt, die eine Schnittstelle zwischen dem Telekommunikations-Festnetz und Telekommunikations-Mobilfunknetzen bereitstellen. Ein Mobilfunk-Gateway wird von dem Nutzer eines Festnetz-Endgerätes angerufen und leitet die gewünschte Verbindung in das Mobilfunknetz weiter, in dem sich der gerufene Teilnehmer befindet. Hierzu implementiert das Mobilfunk-Gateway die Funktionalität eines Mobilfunktelefones und ruft gewissermaßen als Mobilfunktelefon den gerufenen Teilnehmer an. Das Dokument US 6 374 112 B1 stellt über einen UTRAN die Schnittstelle zwischen verschiedenen Telekommunicationsnetzen bereit.

Dabei ist vorgesehen, dass das Mobilfunk-Gateway eine Vielzahl von so genannten SIM-Karten für die verwalteten Mobilfunkkanäle enthält. Durch die SIM-Karten wird jedem Mobilfunk-Kanal genau ein Netzbetreiber zugeordnet.

### Aufgabe der Erfindung

Der vorliegenden Erfindung liegt die Aufgabe zugrunde, ein Verfahren zur Bereitstellung von Verbindungen zwischen einem rufenden Kommunikationsgerät eines ersten Kommunikationsnetzes und einem gerufenen Kommunikationsgerät eines weiteren Kommunikationsnetzes sowie ein Gateway zur Verwendung in einem solchen Verfahren zu Verfügung zu stellen, die sich durch ein hohes Maß an Flexibilität auszeichnen und eine möglichst effektive Bereitstellung der vorhandenen Nutzkanäle ermöglichen.

### Zusammenfassung der Erfindung

Diese Aufgabe wird erfindungsgemäß durch ein Verfahren mit den Merkmalen des Anspruchs 1 und ein Gateway mit den Merkmalen des Anspruchs 7 gelöst. Bevorzugte und vorteilhafte Ausgestaltungen der Erfindung sind in den Unteransprüchen angegeben.

Das erfindungsgemäße Verfahren sieht vor, dass Verbindungen zwischen einem rufenden Kommunikationsgerät eines ersten Kommunikationsnetzes und einem gerufenen Kommunikationsgerät eines weiteren Kommunikationsnetzes über ein Gateway geroutet werden, dass an der Schnittstelle zwischen den jeweiligen Netzen angeordnet ist. Das Gateway verwaltet dabei eine erste Gruppe einer ersten Anzahl von Nutzkanälen und eine zweite Gruppe einer zweiten Anzahl von Nutzkanälen, wobei die Nutzkanäle jeder Gruppe einem bestimmten Kommunikationsnetz zugeordnet sind. Erfindungsgemäß ist vorgesehen, dass die Anzahl der Nutzkanäle in jeder Gruppe dynamisch festlegbar ist. Bei einer Änderung der Festlegung der Anzahl der Nutzkanäle einer Gruppe wird dabei mindestens ein Nutzkanal einer der Gruppen entnommen und einer anderen Gruppe zugeordnet. Da die Nutzkanäle einer Gruppe jeweils einem Kommunikationsnetz zugeordnet sind, führt dies dazu, dass durch die neue Zuordnung mindestens ein Nutzkanal nunmehr einem anderen Kommunikationsnetz zugeordnet ist, so dass über dieses Kommunikationsnetz nunmehr mehr Verbindungen aufgebaut werden können als zuvor.

Zur Realisierung ist vorgesehen, für jeden Nutzkanal eine für ein Kommunikationsnetz spezifische, mit einer Kennung versehene Einsteckkarte bereitzustellen, wobei den Nutzkanälen einer Gruppe Einsteckkarten desselben Kommunikationsnetzes zugeordnet sind. Eine Änderung der Anzahl der Nutzkanäle in einer Gruppe erfolgt dadurch, dass für einen oder mehrere Nutzkanäle die Einsteckkarte gewechselt und dabei die Einsteckkarte eines anderen Kommunikationsnetzes verwendet wird. Dabei kann dieser Wechsel der Einsteckkarte dynamisch in Abhängigkeit von dem Bedarf an Nutzkanälen in den einzelnen Gruppen erfolgen.

Die vorliegende Erfindung beruht auf dem Gedanken, die von dem Gateway verwalteten Nutzkanäle dynamisch, d.h. in Abhängigkeit vom aktuellen Bedarf den einzelnen Kommunikationsnetzen zuzuordnen. Ändert sich der Bedarf, so wird automatisch für einen oder mehrere Nutzkanäle das Kommunikationsnetz gewechselt, so dass für dieses Kommunikationsnetz dann mehr Nutzkanäle bzw. eine höhere Bandbreite zur Verfügung stehen. Ein solcher Wechsel erfolgt natürlich nur, falls die bisher den anderen Kommunikationsnetzen zugeordneten Nutzkanäle zumindest teilweise verfügbar, d.h. nicht belegt sind, so dass sie einem anderen Kommunikationsnetz zugeordnet werden können.

Die erfindungsgemäße Lösung ermöglicht eine wesentlich bessere Ausnutzung der vorhandenen Netzressourcen durch flexible und dynamische Zuordnung von Nutzkanälen zu den einzelnen Kommunikationsnetzen je nach Bedarf.

Es wird darauf hingewiesen, dass unter einem Gateway im Sinne der vorliegenden Erfindung jedes System verstanden wird, das an einem Netzwerkpunkt angeordnet ist, an dem ein Übergang bzw. ein Zugang zu einem anderen Kommunikationsnetz vorliegt. Unter einem Gateway wird insbesondere ein System verstanden, der an der Schnittstelle zwischen einem Telekommunikations-Festnetz und einem Telekommunikations-Mobilfunknetz angeordnet ist, und das aus dem Festnetz kommende Verbindungswünsche in das zugehörige Mobilfunknetz weiterleitet.

Unter einer Verbindung zwischen einem rufenden Kommunikationsgerät und einem gerufenen Kommunikationsgerät wird jede Zuordnung verstanden, die eine Übertragung von Daten zwischen den Kommunikationsgeräten ermöglicht. Ein Verbindungswunsch beinhaltet Signalisierungsinformationen, die vom rufenden Kommunikationsgerät zur Herstellung einer Verbindung mit dem gerufenen Kommunikationsgerät ausgesandt werden. Solche Signalisierungsdaten können je nach verwendeter Übertragungstechnik auf dem gleichen Kanal übersandt werden, auf dem dann auch die Nutzdaten übertragen werden (Innenband-Signalisierung) oder auf einem anderen Kanal (Außenband-Signalisierung).

Ein Nutzkanal ist jeder Pfad durch ein Kommunikationsnetz oder mehrere miteinander verbundene Kommunikationsnetze, über den Signale bzw. Daten übertragen werden können. Der Begriff "Nutzkanal" soll dabei sowohl für die physikalischen Übertragungskanäle als auch logische Kanäle umfassen. Physikalische Übertragungskanäle sind beispielsweise ein Kanal eines klassischen Telefonnetzes, ein ISDN-B-Kanal oder ein physikalischer Funkübertragungskanal eines Mobilfunknetzes. Ein logischer Kanal abstrahiert den konkreten Datenübertragungspfad und stellt auf eine Punkt-zu-Punkt-Kommunikation über definierte physikalische Medien ab.

Es wird weiter darauf hingeweisen, dass der Begriff Einsteckkarte im Sinne der vorliegenden Erfindung funktional zu verstehen ist. Zwar wird es sich in der Regel um eine tatsächliche Karte mit einem Chip handeln. Grundsätzlich kann die Funktionalität einer Einsteckkarte jedoch etwa auch durch Software bereitgestellt werden, die etwa über das Internet, über Funk oder eine CD auf ein Telekommunikationsgerät geladen wird.

In einer bevorzugten Ausgestaltung der Erfindung ist vorgesehen, dass eine Änderung der Festlegung der Anzahl der Nutzkanäle in den einzelnen Gruppen automatisch erfolgt, falls eine vorgebbare Anzahl von freien Nutzkanälen einer Gruppe nicht mehr zu Verfügung steht. Beispielsweise wird in jeder Gruppe von Nutzkanälen stets ein Nutzkanal bereitgehalten. Wird anhand der aktuellen Auslastung somit festgestellt, dass eine Gruppe von Nutzkanälen keinen freien Nutzkanal oder lediglich eine Anzahl von freien Nutzkanälen besitzt, die unterhalb einer vorgegebenen Anzahl liegt, so wird in einer anderen Gruppe überprüft, ob dort noch freie Nutzkanäle vorhanden sind. Ist dies der Fall, wird mindestens ein freier Nutzkanal der anderen Gruppe von Nutzkanälen der zuerst betrachteten Gruppe zugefügt, die keinen oder nicht mehr ausreichend viele freie Nutzkanäle besitzt. Somit können die verfügbaren Ressourcen an Nutzkanälen an den jeweils vorliegenden Bedarf automatisch und aktuell angepasst werden. Das Wechseln bzw. neue Zuordnen von Nutzkanälen somit auch präventiv erfolgen.

Durch das bevorzugte Bereithalten mindestens eines freien Nutzkanals in jeder Gruppe von Nutzkanälen wird sichergestellt, dass ein eingehender Verbindungswunsch stets sofort weitergeleitet werden kann.

Alternativ wird die Anzahl der Nutzkanäle jeder Gruppe erst bei Vorliegen eines Verbindungswunsches neu festgelegt, und dabei mindestens ein Nutzkanal neu zugeordnet, wenn bei einem eingehenden Verbindungswunsch festgestellt wird, dass kein Nutzkanal des dem gerufenen Kommunikationsgerät zugeordneten Kommunikationsnetzes bereitsteht. Bei dieser Variante wird erst bei Eintreten des Bedarfs ein Nutzkanal einer anderen Gruppe der Gruppe mit dem aktuellen Bedarf an einem Nutzkanal zugeordnet.

Bei dem ersten Kommunikationsnetz handelt es sich bevorzugt um ein Telekommunikations-Festnetz und bei den weiteren Kommunikationsnetzen um Telekommunikations-Mobilfunknetze. Das Gateway weist dabei Mittel für eine Mobilfunk-Kommunikation mit Kommunikationsgeräten der weiteren Mobilfunknetze auf. Hierzu ist für jeden Nutzkanal eine für ein Mobilfunknetz spezifische, mit einer Kennung versehene Einsteckkarte vorgesehen. Es handelt sich hierbei insbesondere um eine SIM-Karte.

Eine SIM-Karte enthält eine Kennung, über die sie in allen Mobilfunknetzen eindeutig identifizierbar ist. Darüber hinaus weist eine SIM-Karte eine PIN-Nummer (PIN - Personal Identity Number), sicherheitsrelevante Daten wie Kommunikationsschlüssel und Sicherheitsalgorithmen, nutzerspezifische Daten wie Kurzwahlnummern sowie netzspezifische Daten wie die Kennung des aktuellen Aufenthaltsbereiches auf. Eine SIM-Karte personalisiert eine Mobilstation hinsichtlich des Nutzers und hinsichtlich des Netzbetreibers und ermöglicht die Abrechnung von Gesprächsgebühren von dem Netzbetreiber.

In einer bevorzugten Ausgestaltung ist dabei vorgesehen, dass für jeden Nutzkanal Einsteckkarten mindestens zweier Kommunikationsnetze, insbesondere Mobilfunknetze vorgehalten werden. Ein Wechsel einer Einsteckkarte wird dann programmtechnisch dadurch realisiert, dass die gewünschte neue Einsteckkarte für den betrachteten Nutzkanal aktiviert, die bisherige Einsteckkarte dagegen deaktiviert wird.

Die Erfindung betrifft des weiteren ein Gateway, das Mittel zur dynamischen Festlegung der Anzahl der Nutzkanäle in jeder Gruppe aufweist, wobei bei einer Änderung der Festlegung mindestens ein Nutzkanal einer der Gruppen entnommen und einer anderen Gruppe und damit einem anderen Kommunikationsnetz zugeordnet wird. Dabei sind eine Mehrzahl von mit einer Kennung versehene Einsteckkarten im Gateway vorgesehen, wobei jedem Nutzkanal eine für ein Kommunikationsnetz spezifische Einsteckkarte zugeordnet ist und den Nutzkanälen einer Gruppe Einsteckkarten desselben Kommunikationsnetzes zugeordnet sind. Die Festlegungsmittel zur Änderung der Anzahl der Nutzkanäle jeder Gruppe bewirken ein Wechseln der Einsteckkarte für einen oder mehrere Nutzkanäle. Dabei ist eine gewechselte Einsteckkarte jeweils einem anderen der Kommunikationsnetze zugeordnet.

### Beschreibung mehrerer bevorzugter Ausführungsbeispiele

Die Erfindung wird nachfolgend unter Bezugnahme auf die Figuren der Zeichnung anhand mehrerer Ausführungsbeispiele näher erläutert. Es zeigen:
- Figur 1 -: eine Telekommunikationsanordnung mit einem Telekommmunikations-Festnetz und einem daran angeschlossenen Mobilfunk-Gateway;
- Figur 2 -: schematisch den Aufbau eines Mobilfunk-Gateways gemäß Figur 1;
- Figur 3 -: schematisch den Aufbau einer Einsteckkarte eines Gateways gemäß Figur 2;
- Figur 4 -: die Ober- und Unterseite eines SIM-Karteneinschubs einer Einsteckkarte gemäß Figur 3;
- Figur 5a -: schematisch ein funktionelles Blockschaltbild eines Mobilfunk-Gateways in einem ersten Zuordnungszustand und
- Figur 5b -: schematisch ein funktionelles Blockschaltbild eines Mobilfunk-Gateways in einem zweiten Zuordnungszustand.

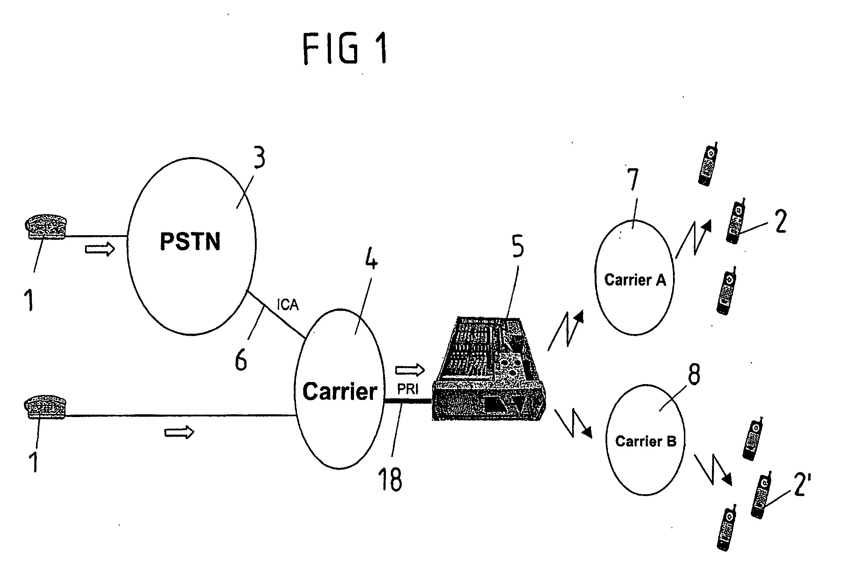

Figur 1 zeigt eine Telekommunikationsanordnung, die den Aufbau einer Verbindung zwischen einem rufenden Kommunikationsgerät 1, 1' eines ersten Kommunikationsnetzes und einem gerufenen Kommunikationsnetz 2, 2' eines weiteren Kommunikationsnetzes ermöglicht. Bei dem Kommunikationsgerät 1, 1' handelt es sich im dargestellten Ausführungsbeispiel um ein Telekommunikations-Endgerät (TK-Endgerät), beispielsweise ein Telefon oder einen Computer mit einer ISDN-Karte.

Ein TK-Endgerät 1, in Figur 1 beispielhaft als Telefon dargestellt, ist in an sich bekannter Weise über eine Ortsvermittlungsstelle (nicht dargestellt) mit einem leitungsvermittelten Telekommunikationsnetz 3 (PSTN-Netz - public switched telephony network) verbunden ist. Bei dem Telekommunikationsnetz 3 handelt es sich insbesondere um das Netz des ehemaligen Monopolisten, in Deutschland die Deutsche Telekom AG. Das Telekommunikationsnetz 3 ist über einen so genannten Interconnect-Anschluss ICA 6 mit dem Telekommunikationsnetz 4 eines weiteren, alternativen Netzanbieters verbunden. Die Zusammenschaltung von Kommunikationsnetzen über Interconnect-Anschlüsse ist an sich bekannt, so dass hierauf nicht weiter eingegangen wird. Für die Zusammenschaltung hat der Betreiber des Netzes 4 eine Zusammenschaltungsgebühr (Interconnect-Gebühr) an den Betreiber des Netzes 3 zu zahlen. Alternativ ist ein Endgerät entsprechend dem unteren, in Figur 1 dargestellten Endgerät 1' direkt an das Netz 4 eines alternativen Netzanbieters angeschlossen.

An das Netz 4 ist des weiteren ein Mobilfunk-Gateway 5 angeschlossen. Die Anbindung des Mobilfunk-Gateways 5 an das Netz 4 erfolgt beispielsweise durch mindestens einen Primary-Rate-Interface (PRI) Anschluß 18 des diensteintegrierten Netzes ISDN, der 30 B-Datenkanäle und einen D-Signalisierungskanal bereitstellt (E1-Leitung). Alternativ kann das Mobilfunk-Gateway 5 grundsätzlich auch direkt an das Netz 3 des ehemaligen Monopolisten angeschlossen sein.

Das Mobilfunkgateway 5 stellt einen Netzzugang zu einer Mehrzahl von Mobilfunknetzen 7, 8 bereit. Hierbei handelt es sich beispielsweise in Deutschland um die Netze D1, D2 und E-Plus. In Figur 1 sind beispielhaft zwei Netze 7, 8 dargestellt. Ein gerufenes Kommunikationsgerät eines solchen Mobilfunknetzes 7, 8 ist beispielsweise ein Mobilfunktelefon 2, 2', das über eine SIM-Karte individualisiert und dem entsprechenden Mobilfunknetz 7, 8 zugeordnet ist. Es kann somit über das jeweilige Mobilfunknetz 7, 8 eine Telekommunikationsverbindung zu einem Mobilfunktelefon 2, 2' aufgebaut werden kann.

Sofern nun ein Endgerät 1, 1' des Festnetzes 3, 4 eine Telekommunikationsverbindung, insbesondere eine Telefonverbindung zu einem Endgerät 2, 2' eines Mobilfunknetzes 7, 8 aufbauen will, wird der Verbindungswunsch über das Telekommunikationsnetz 3, 4, an das das rufende Endgerät 1, 1' angeschlossen ist, und ggf. unter Zwischenschaltung eines weiteren Telekommunikationsnetzes 4 an den Mobilfunk-Gateway 5 geleitet.

Wie nachfolgend noch erläutert, sind in das Mobilfunk-Gateway 5 eine Vielzahl von Mobilstationen integriert, die einen Zugang des Mobilfunk-Gateways 5 zu den einzelnen Mobilfunknetzen 7, 8 ermöglichen. Das Mobilfunk-Gateway 5 erkennt anhand der Vorwahlnummer des eingehenden Rufes das Mobilfunknetz, das dem gerufenen Endgerät 2, 2' zugeordnet ist. Zum Aufbau einer Verbindung zwischen dem rufenden Endgerät 1, 1' und dem gerufenen Endgerät 2, 2' stellt es einen Nutzkanal des entsprechenden Mobilfunknetzes 7, 8 bereit. Das Mobilfunkgateway 5 dient dabei selbst als Mobilfunkgerät und ruft über das Mobilfunknetz, in dem sich das gerufenen Endgerät 2, 2' befindet, dieses an.

Der Ruf wird dann in an sich bekannter Weise über eine Sende-Empfangsstation BTS (BTS - Base-Transceiver-Station), eine zugehörige Steuerungseinrichtung und weitere Netzinfrastruktur des Mobilfunknetzes 7, 8 an das gerufene Endgerät 2, 2' geleitet.

Alternativ wäre es auch möglich, eine Verbindung in ein Mobilfunknetz 7, 8 über einen Übergabepunkt des Telekommunikationsnetzes 3 bereitzustellen. Solche Übergabepunkte, die den Ruf dann in das Mobilfunknetz weiterleiten, sind an sich bekannt und finden auch Verwendung. Nachteilig sind auf diese Weise aufgebaute Telekommunikationsverbindungen jedoch mit hohen Gebühren verbunden, die der Betreiber des Telekommunikationsnetzes 3 für die Rufweiterleitung in das Mobilfunknetz erhebt, wobei gegebenenfalls zusätzlich Inerconnect-Gebühren hinzukommen. Eine gemäß Figur 1 aufgebaute Verbindung zwischen einem rufenden Endgerät 1, 1' im Festnetz und einem gerufenen Endgerät 2, 2' eines Mobilfunknetzes zeichnet sich dagegen durch eine wesentlich günstigere Preisstruktur aus, da die Mobilfunkverbindung zwischen dem Gateway 5 mit dem gerufenen Endgerät 2, 2' sowie die Festnetzverbindung zwischen dem rufenden Endgerät 1, 1' und dem Mobilfunkgateway 5 vergleichsweise kostengünstig sind. Statt der Kosten für einen Anruf von Festnetz zu Mobil fallen die Kosten eines Anrufs von Mobil zu Mobil plus geringen Zusatzkosten für die Festnetzverbindung an.

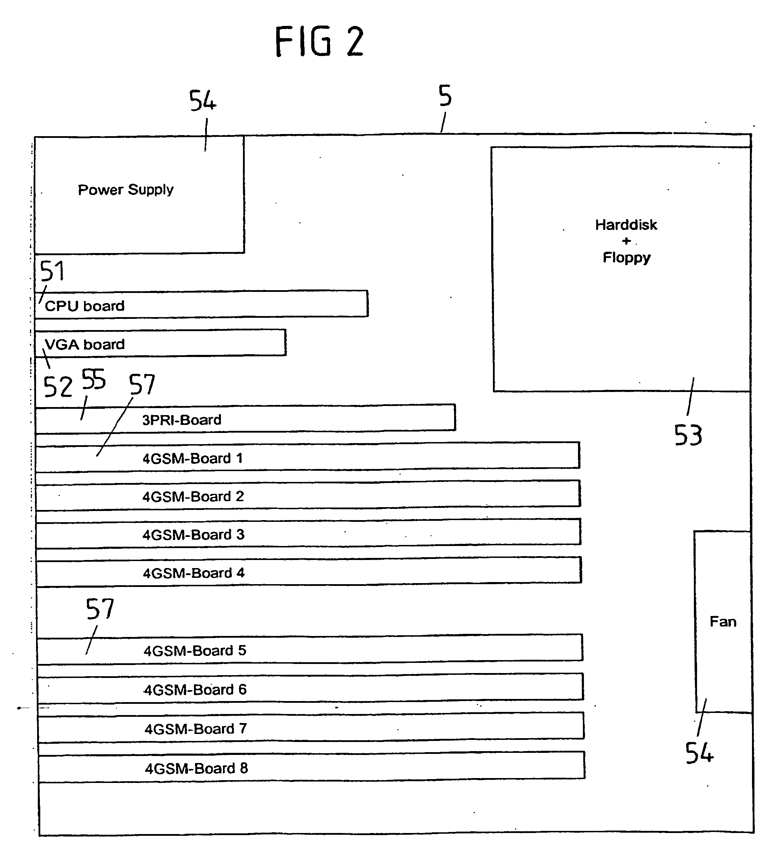

Die Figuren 2 bis 4 zeigen im Einzelnen den Aufbau eines Mobilfunk-Gateways 5. Gemäß Figur 2 weist das Mobilfunk-Gateway eine zentrale Prozessoreinheit 51, eine Grafikkarte 52, Harddisk- und Floppy-Laufwerke 53, eine Stromversorgung 54 und einen Ventilator 55 auf. Eine Einsteckkarte 55 stellt drei PRI (E1)-Verbindungen zum Festnetz bereit, wobei auch eine andere Zahl von E1-Verbindungen vorgesehen sein kann. Die Einsteckkarte 55 stellt ein Koppelfeld zur Verfügung, über das eingehende Verbindungen jeweils einem Ausgang bzw. Nutzkanal zum Mobilfunknetz zugeordnet werden. Alternativ wird das Koppelnetz durch eine entsprechende Software der zentralen Prozessoreinheit 51 bereitgestellt.

Des weiteren weist das Mobilfunk-Gateway 5 eine Vielzahl von Einsteckkarten 57 für den Mobilfunk auf, die jeweils eine Vielzahl von Mobilstationen bereitstellen, im dargestellten Ausführungsbeispiel jeweils vier Mobilstationen. Gemäß dem vorherrschenden Standard im Mobilfunkbereich handelt es sich um GSM-Mobilstationen (GSM - Global System for Mobile Communication).

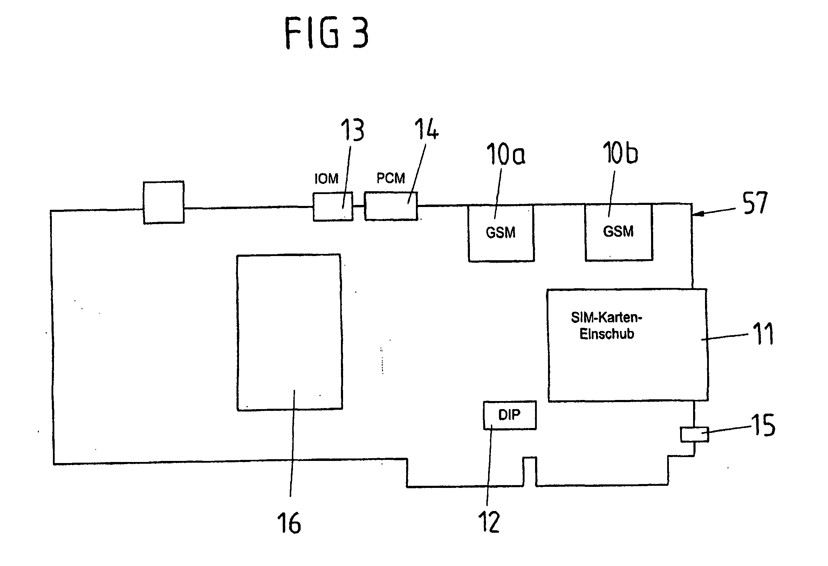

Eine Einsteckkarte 57 für den Mobilfunk ist in Figur 3 näher dargestellt. Die Einsteckkarte 57 weist auf der Vorder- und Rückseite jeweils zwei GSM-Module 10a, 10b auf, wobei die Figur 3 nur die auf der Oberseite dargestellten GSM-Module 10a, 10b zeigt. Jedes GSM-Modul 10a, 10b, das lediglich schematisch dargestellt ist, weist die Funktionalität eines Mobilgerätes eines Mobilfunknetzes auf. Jedem GSM-Modul 10, 10b sind mehrere SIM-Karten zogeordnet, wobei zu einem bestimmten Zeitpunkt immer nur eine SIM-Karte aktiviert ist. Die SIM-Karten sind auf einem SIM-Karteneinschub 11 angeordnet. Ein GSM-Modul 10a, 10b und eine SIM-Karte bilden jeweils eine Mobilstation eines Mobilfunknetzes aus.

Die Adresse der Einsteckkarte 57 ist über ein DIP-Feld 12 einstellbar. Ein Anschluss an ein internes Koppelfeld des Gateways 5 erfolgt über einen PCM-Bus 13 oder einen IOM-Bus 14. Eine Antenne 15 zum Aussenden oder Empfang von Funksignalen wird an der Rückseite der Karte angeschraubt. Die Einsteckkarte 57 verfügt des weiteren bevorzugt über einen eigenständigen Prozessor 16 mit Betriebssystem, der die einzelnen Module steuert. Alternativ erfolgt eine Steuerung ausschließlich über die zentrale prozessoreinheit.

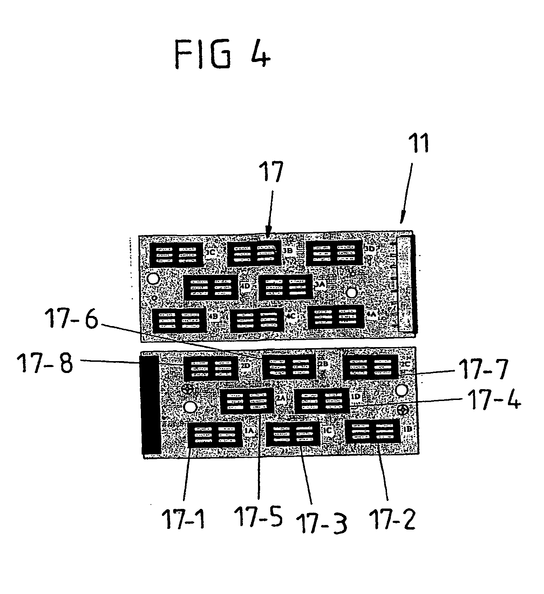

Figur 4 zeigt den SIM-Karteneinschub 11 der Figur 3 im Detail. Danach sind auf der Vorder- und Rückseite des Karteneinschubs 11 jeweils Aufnahmeplätze für acht SIM-Karten 17 vorgesehen, so dass insgesamt sechzehn SIM-Karten 17 vorgehalten werden können. Jedem GSM-Modul 10a, 10b sind dabei maximal vier SIM-Karten 17 zuordbar. Beispielsweise sind mit dem einen GSM-Modul 10a vier SIM-Karten 17-1, 17-2, 17-3, 17-4, dem GSM-Modul 10b vier Einsteckkarten 17-5, 17-6, 17-7, 17-8, etc. zugeordnet. Allerdings müssen nicht alle Aufnahmeplätze belegt sein.

Es verhält sich nun so, dass für eine konkrete Verbindung in ein Mobilfunknetz 7, 8 jeweils nur eine SIM-Karte 16 eingesetzt werden kann. Für jede Mobilfunkverbindung bzw. jeden dazugehörigen Nutzkanal muss und kann daher eine Auswahl getroffen werden, welche der vier zu Verfügung stehenden SIM-Karten einer gewünschten Verbindung zugeordnet wird. Beispielsweise kann es sich bei der SIM-Karte 17-1 um eine SIM-Karte des Netzes D1, bei der SIM-Karte 17-2 um eine SIM-Karte des Netzes D2 und bei der SIM-Karte 17-3 um eine SIM-Karte des Netzes E-Plus handeln. Je nachdem, ob ein gerufener Endteilnehmer dem Netz D1, D2 oder E-Plus angehört, wird die entsprechende SIM-Karte aktiviert.

Es wird dabei eine initiale Zuordnung vergeben. Im dargestellten Ausführungsbeispiel weist das Mobilfunkgateway 5 acht Mobilfunk-Platinen 57 mit jeweils vier GSM-Modulen auf, so dass es maximal 32 Nutzkanäle an ein Mobilfunknetz bereitgestellt werden können. Es ist beispielsweise vorgesehen, dass von diesen 32 Nutzkanälen zehn Nutzkanäle für einen Zugang zum D1-Netz, zehn Nutzkanäle für einen Zugang zum D2-Netz und zwölf Nutzkanäle für einen Zugang zum E-Plus-Netz vorgesehen sind. Dies wird dadurch erreicht, dass für zehn Nutzkanäle die SIM-Karte für das Netz D1, für weitere zehn Nutzkanäle die SIM-Karten für das Netz D2 und für weitere zwölf Nutzkanäle die SIM-Karten für das Netz E-Plus aktiviert werden. Es werden somit jeweils Gruppen von Nutzkanälen für das Netz D1, das Netz D2 und das Netz E-Plus gebildet.

Stellt nun der Zentralprozessor 51 des Gateways 5 oder eine andere Steuereinheit fest, dass für ein bestimmtes Mobilfunknetz, z.B. das D1-Netz, die vorgesehenen Nutzkanäle vollständig oder fast vollständig belegt sind, beispielsweise nur noch ein freier Nutzkanal oder eine andere, vorgebbare Anzahl von freien Nutzkanälen vorliegt, so wird geprüft, ob in der anderen Gruppe der Nutzkanäle für D2 und/oder der anderen Gruppe der Nutzkanäle für E-Plus noch ausreichend Mobilfunkkanäle vorhanden sind. Ausreichende Mobilfunkkanäle sind dabei dann z.B. vorhanden, wenn die Belegung niedriger ist als die nicht ausreichende Belegung der betrachteten Gruppe. Für diesen Fall wird ein Nutzkanal der Gruppe mit einer geringen Auslastung dynamisch der Gruppe der Nutzkanäle für das D1-Netz hinzugeschaltet, so dass dieses nun über elf Nutzkanäle verfügt.

Um dieses Zuschalten eines Nutzkanals zu erreichen, wird auf einer der Mobilfunkkarten 57 für einen Nutzkanal, der bisher einer anderen Gruppe bzw. einem anderen Mobilfunknetz zugeordnet war, die SIM-Karte für das D1-Netz aktiviert und die bisher verwendete Karte deaktiviert. Dies ist möglich, da für sämtliche oder mindestens zwei Netze entsprechenden SIM-Karten vorgehalten werden und in den entsprechenden SIM-Karteneinschub 11 eingeschoben sind.

Das Wechseln der SIM-Karte erfolgt dabei automatisch durch eine entsprechende Programmierung und dynamisch in Abhängigkeit von der Auslastung der Nutzkanäle der einzelnen Mobilfunknetze. Die verfügbaren Ressourcen an Nutzkanälen passen sich automatisch an den jeweils vorliegenden Bedarf an.

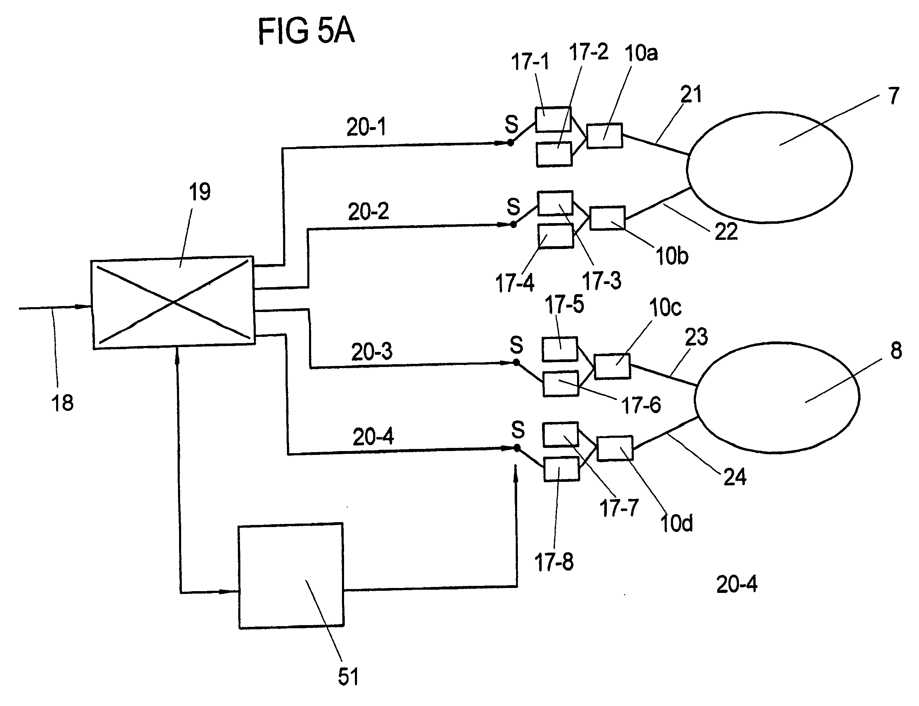

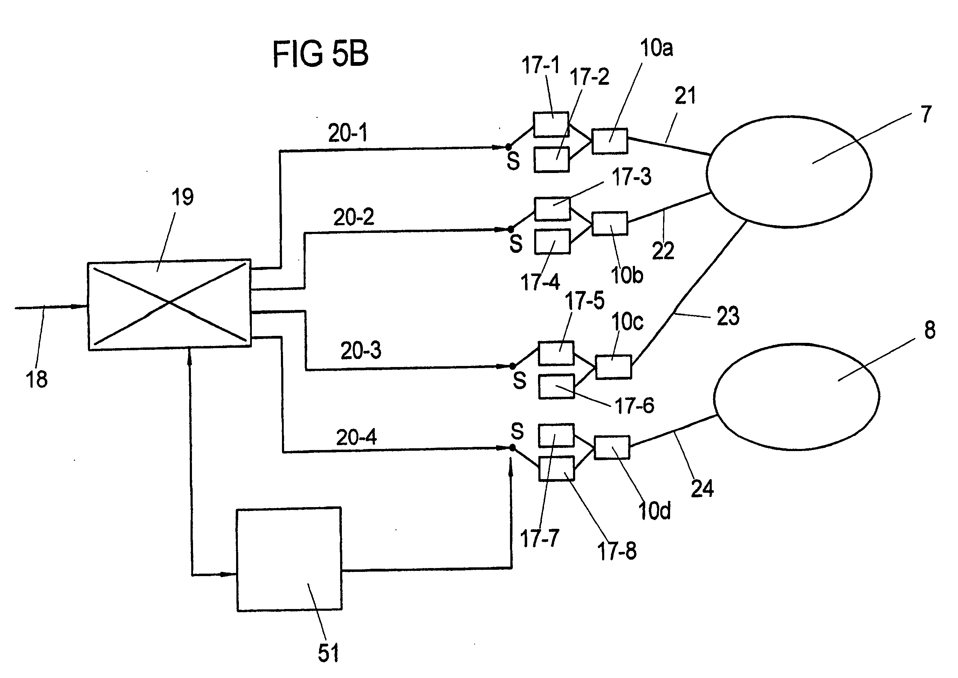

Dieser Vorgang wird ergänzend anhand der Figuren 5a und 5b erläutert. Figur 5a zeigt ein Koppelfeld 19, das beispielsweise in der Einsteckkarte 55 für eine PRI (E1)-Ankopplung gemäß Figur 2 implementiert ist. Das Koppelfeld 19 ist zum einen über einen PRI-Anschluß 18 gemäß Figur 1 an ein Festnetz angeschlossen. Die eingehenden, gemultiplexten Datenkanäle des PRI-Anschlusses 18 werden durch das Koppelnetz 19 auf eine Vielzahl von einzelnen Datenkanälen 20-1, 20-2, 20-3 und 20-4 verteilt. Dies wird über den zentralen Prozessor 51 des Gatesways 5 oder eine andere Steuereinheit gesteuert.

Zur einfacheren Darstellung sind in der Figur 5a nur vier GSM-Module 10a, 10b, 10c, 10d mit jeweils zwei SIM-Karten 17-1, 17-2, 17-3, 17-4, 17-5, 17-6, 17-7, 17-8 und zwei Mobilfunknetzen 7, 8 vorgesehen. Den Datenkanälen 20-1, 20-2, 20-3, 20-4 wird durch softwaregesteuerte Schalter S jeweils eine der SIM-Karten 17-1, 17-3, 17-6, 17-8 zugeordnet. Die Steuerung der Schalter S erfolgt mittels des zentralen Prozessors 51 oder einer anderen Steuereinheit. Über die GSM-Module 10a, 10b, 10c, 10d wird für jeden Datenkanal 20-1, 20-2, 20-3, 20-4 jeweils ein Nutzkanal 21, 22, 23, 24, für eine Mobilfunkübertragung bereitgestellt. Die Zuordnung eines Nutzkanals 21, 22, 23, 24 zu einem Mobilfunknetz 17, 18 erfolgt über die gewählte SIM-Karte. Im Ausführungsbeispiel der Figur 5a sind für die beiden oberen Nutzkanäle 21, 22 die SIM-Karten 17-1, 17-3 ausgewählt, die dem Mobilfunknetz 7 zugeordnet sind. Für die beiden unteren Nutzkanäle 23, 24 sind die SIM-Karten 17-6, 17-8 ausgewählt, die dem Mobilfunknetz 8 zugeordnet sind. Die jeweils anderen SIM-Karten 17-2, 17-4, 17-5, 17-7 sind nicht aktiv geschaltet.

Die beiden oberen Nutzkanäle 21, 22 bilden eine erste Gruppe einer ersten Anzahl N von Nutzkanälen des Mobilfunknetzes 7, wobei N im dargestellten Beispiel gleich zwei ist. Die beiden unteren Nutzkanäle 23, 24 bilden eine zweite Gruppe einer zweiten Anzahl M von Nutzkanälen des Mobilfunknetzes 8, wobei M im dargestellten Beispiel ebenfalls gleich zwei ist.

Sofern nun ein zusätzlicher Nutzkanal für das Mobilfunknetz 7 benötigt wird, wird durch Wechseln der SIM-Karte eines Nutzkanals ein zusätzlicher Nutzkanal für das Mobilfunknetz 7 bereitgestellt. Im Ausführungsbeispiel der Figur 5b wird die SIM-Karte 17-6 für das Netz 8 deaktiviert und stattdessen die SIM-Karte 17-5 für das Netz 7 aktiviert. Die Steuerung erfolgt durch den zentralen Prozessor 51 des Gatesways 5 oder eine andere Steuereinheit. Der Nutzkanal 23 ist nun ebenfalls dem Netz 7 zugeordnet. Die Anzahl der Nutzkanäle der ersten Gruppe hat sich um eins erhöht, die Anzahl der Nutzkanäle der zweiten Gruppe um eins reduziert. Bei einer Änderung der Auslastung der Nutzkanäle kann die Festlegung der Nutzkanäle dynamisch wieder geändert werden.

Zurückkommend auf Figur 1 wird somit ein beispielsweise an ein Endgerät 2 des Netzes 7 gerichteter Ruf vom Mobilfunk-Gateway 5 an ein GSM-Modul 10a, 10b, 10c, 10d geleitet, das mit einer SIM-Karte 17 des entsprechenden Netzes 7 verbunden ist. Sofern der Zentralprozessor 51 oder eine andere Steuereinheit des Mobilfunk-Gateways 5 feststellt, dass für das betrachtete Netz 7 keine oder nicht ausreichend Nutzkanäle zur Verfügung stehen, Nutzkanäle für andere Mobilfunknetze 8 jedoch noch ausreichend vorhanden sind, so wird die Anzahl der Nutzkanäle für mindestens zwei Gruppen von Nutzkanälen neu festgelegt und dabei mindestens ein Nutzkanal der Gruppe von Nutzkanälen für das betrachtete Mobilfunknetz 7 hinzugefügt. Dies erfolgt wie erläutert durch einen Wechsel der SIM-Karte 17 für den betrachteten Nutzkanal.

Die Erfindung beschränkt sich in ihrer Ausführung nicht auf die vorstehend dargestellten Ausführungsbeispiele. Beispielsweise kann ein Mobilfunk-Gateway eine andere Anzahl von Mobilfunk-Einsteckkarten, jede Mobilfunk-Einsteckkarte eine andere Anzahl von GSM-Modulen und jedes GSM-Modul eine andere Anzahl von SIM-Karten als dargestellt besitzen. Auch ist die Erfindung auch nicht darauf beschränkt, dass das Gateway eine Schnittstelle zwischen einem Festnetz und mehreren Mobilfunknetzen bereitstellt. Grundsätzlich kann die beschrieben dynamische Zuordnung von Nutzkanälen auch bei anderen Kommunikationsnetzen erfolgen.

## Patentansprüche

1. Verfahren zur Bereitstellung von Verbindungen zwischen einem rufenden Kommunikationsgerät (1, 1') eines ersten Kommunikationsnetzes (3, 4) und einem gerufenen Kommunikationsgerät (2, 2') eines weiteren Kommunikationsnetzes (7, 8) unter Verwendung eines Gateways (5), das mit dem ersten Kommunikationsnetz (3, 4) verbunden ist, wobei
- das Gateway(5)
o eine erste Gruppe einer ersten Anzahl (N) von Nutzkanälen (21, 22) eines ersten weiteren Kommunikationsnetzes (7) und
o mindestens eine zweite Gruppe einer zweiten Anzahl (M) von Nutzkanälen (23, 24) eines zweiten weiteren Kommunikationsnetzes (8) verwaltet,
- zur Herstellung einer Verbindung zwischen dem rufenden Kommunikationsgerät und dem gerufenen Kommunikationsgerät Informationen betreffend einen Verbindungswunsch vom rufenden Kommunikationsgerät (1, 1') zunächst zum Gateway (5) geroutet werden,
- das Gateway (5) anhand der erhalteten Informationen feststellt, welchem weiteren Kommunikationsnetz (7, 8) das gerufene Kommunikationsgerät (2, 2') zugeordnet ist, und
- das Gateway (5) einen Nutzkanal (21-24) des entsprechenden Kommunikationsnetzes (7, 8) für die Verbindung bereitstellt,
**dadurch gekennzeichnet, dass**
- die Anzahl der Nutzkanäle (21-24) in jeder Gruppe dynamisch festgelegt wird, wobei bei einer Änderung der Festlegung mindestens ein Nutzkanal (23) einer der Gruppen entnommen und einer anderen Gruppe und damit einem anderen Kommunikationsnetz (7, 8) zugeordnet wird,
- hierzu für jeden Nutzkanal (21-24) eine für ein Kommunikationsnetz (7, 8) spezifische, mit einer Kennung versehene Einsteckkarte (17-1, ..., 17-8) bereitstellt ist, wobei den Nutzkanälen einer Gruppe Einsteckkarten (17-1, 17-3; 17-6, 17-8) desselben Kommunikationsnetzes (7, 8) zugeordnet sind, und
- eine Änderung der Anzahl der Nutzkanäle in einer Gruppe **dadurch** erfolgt, dass für einen oder mehrere Nutzkanäle (23) die Einsteckkarte gewechselt und dabei die Einsteckkarte (17-5) eines anderen Kommunikationsnetzes (7) verwendet wird.

2. Verfahren nach Anspruch 1, **dadurch gekennzeichnet, dass** eine Änderung der Festlegung der Anzahl der Nutzkanäle (21-24) in den einzelnen Gruppen automatisch erfolgt, wenn eine vorgebbare Anzahl von freien Nutzkanälen einer Gruppe nicht mehr zur Verfügung steht.

3. Verfahren nach Anspruch 2, **dadurch gekennzeichnet, dass** in jeder Gruppe von Nutzkanälen stets ein freier Nutzkanal bereit gehalten wird.

4. Verfahren nach mindestens einem der Anspüche 1 bis 3, **dadurch gekennzeichnet, dass** die Anzahl der Nutzkanäle in jeder Gruppe erst bei Vorliegen eines Verbindungswunsches neu festgelegt und mindestens ein Nutzkanal neu zugeordnet wird, sofern für die gewünschte Verbindung kein Nutzkanal des dem gerufenen Kommunikationsgerät (2, 2') zugehörigen Kommunikationsnetzes (7, 8) bereitsteht.

5. Verfahren nach mindestens einem der Ansprüche 1 bis 4, **dadurch gekennzeichnet, dass** das erste Kommunikationsnetz ein Telekommunikations-Festnetz (3, 4) und die weiteren Kommunikationsnetze Telekommunikations-Mobilfunknetze (7, 8) sind.

6. Verfahren nach mindestens einem der Ansprüche 1 bis 5, **dadurch gekennzeichnet, dass** ein Wechseln einer Einsteckkarte (23) programmtechnisch realisiert wird, indem für jeden Nutzkanal (21, 22, 23, 24) Einsteckkarten (17-1, ..., 17-8) mindestens zweier Kommunikationsnetze (7, 8) vorgehalten werden und die gewünschte neue Einsteckkarte (17-5) aktiviert, die bisherige Einsteckkarte (17-6) dagegen deaktiviert wird.

7. Gateway, das mit einem ersten Kommunikationsnetz (3, 4) verbunden ist und das eine erste Gruppe einer ersten Anzahl (N) von Nutzkanälen (21, 22) eines ersten weiteren Kommunikationsnetzes (7) und mindestens eine zweite Gruppe einer zweiten Anzahl (M) von Nutzkanälen (23, 24) eines zweiten weiteren Kommunikationsnetzes (8) verwaltet, und das aufweist:
- Mittel (51) zum Auswerten von Informationen betreffend einen Verbindungswunsch eines rufenden Kommunikationsgeräts (1, 1') des ersten Kommunikationsnetzes (3, 4);
- Mittel (10a-10d) zur Herstellung einer Verbindung zu einem gerufenen Kommunikationsgerät (2, 2') eines der weiteren Kommunikationsnetze (7, 8) und hierzu
- Mittel (16) zum Bereitstellen eines Nutzkanals (21-24) des entsprechenden Kommunikationsnetzes (7, 8) für die gewünschte Verbindung,
**gekennzeichnet durch**
- eine Mehrzahl von mit einer Kennung versehenen Einsteckkarten (17-1, ..., 17-8), wobei jedem Nutzkanal eine für ein Kommunikationsnetz (7, 8) spezifische Einsteckkarte zugeordnet ist und den Nutzkanälen einer Gruppe Einsteckkarten desselben Kommunikationsnetzes (7, 8) zugeordnet sind,
- Mittel (51), die die Anzahl der Nutzkanäle (21-24) in jeder Gruppe dynamisch festlegen, wobei bei einer Änderung der Festlegung mindestens ein Nutzkanal (23) einer der Gruppen entnommen und einer anderen Gruppe und damit einem anderen Kommunikationsnetz (7, 8) zugeordnet wird, und wobei
- die Festlegungsmittel (51) zur Änderung der Anzahl der Nutzkanäle einer Gruppe ein Wechseln der Einsteckkarte für einen oder mehrere Nutzkanäle bewirken, wobei eine gewechselte Einsteckkarte (23) jeweils einem anderen der Kommunikationsnetze (7, 8) zugeordnet ist.

8. Gateway nach Anspruch 7, **dadurch gekennzeichnet, dass** die Festlegungsmittel (51) eine Änderung der Festlegung der Anzahl der Nutzkanäle (21-24) in den einzelnen Gruppen automatisch vornehmen, wenn eine vorgebbare Anzahl von freien Nutzkanälen einer Gruppe nicht mehr zur Verfügung steht.

9. Gateway nach Anspruch 8, **dadurch gekennzeichnet, dass** die Festlegungsmittel (51) in jeder Gruppe von Nutzkanälen stets einen freien Kanal bereit halten.

10. Gateway nach mindestens einem der Ansprüche 7 bis 9, **dadurch gekennzeichnet, dass** die Festlegungsmittel (51) die Anzahl der Nutzkanäle in jeder Gruppe erst bei Vorliegen eines Verbindungswunsches neu festlegen und dabei mindestens einen Nutzkanal neu zuordnen, falls für die gewünschte Verbindung kein Nutzkanal des dem gerufenen Kommunikationsgerät (2, 2') zugehörigen Kommunikationsnetzes (7, 8) bereitsteht.

11. Gateway nach mindestens einem der Ansprüche 7 bis 10, **dadurch gekennzeichnet, dass** das erste Kommunikationsnetz ein Telekommunikations-Festnetz (3, 4) und die weiteren Kommunikationsnetze Telekommunikations-Mobilfunknetze (7, 8) sind.

12. Gateway nach mindestens einem der Ansprüche 7 bis 11, **dadurch gekennzeichnet, dass** dem Gateway (5) für jeden Nutzkanal (21-24) Einsteckkarten (17-1, ..., 17-8) mindestens zweier Kommunikationsnetze (7, 8) zugeordnet sind und die Festlegungsmittel (51) bei einer Änderung der Festlegung für einen betrachteten Nutzkanal (23) programmtechnisch die derzeit aktivierte Einsteckkarte (17-6) deaktivieren und eine andere, dem gewünschten Kommunikationsnetz (7) zugeordnete Einsteckkarte (17-5) aktivieren.

## Claims

1. Method for providing connections between a calling communication device (1, 1') of a first communication network (3, 4) and a called communication device (2, 2') of a further communication network (7, 8) by using a gateway (5) which is connected to the first communication network (3, 4), wherein
- the gateway (5)
o administers a first group of a first number (N) of useful channels (21, 22) of a first further communication network (7) and
o at least one second group of a second number (M) of useful channels (23, 24) of a second further communication network (8), and
- information relating to a call request by the calling communication device (1, 1') is first routed to the gateway (5) for establishing a connection between the calling communication device and the called communication device,
- the gateway (5) determines by means of the information obtained to which further communication network (7, 8) the called communication device (2, 2') is allocated, and
- the gateway (5) provides a useful channel (21-24) of the corresponding communication network (7, 8) for the connection,
**characterized in that**
- the number of useful channels (21-24) in each group is dynamically determined, at least one useful channel (23) being taken from one of the groups and allocated to another group, and thus to another communication network (7, 8) in the case of a change in the determination,
- for this purpose, a plug-in card (17-1, ...., 17-8) provided with an identification, which is specific to a communication network (7, 8) is provided for each useful channel (21-24), plug-in cards (17-1, 17-3; 17-6, 17-8) of the same communication network (7, 8) being allocated to the useful channels of a group, and
- the number of useful channels in a group is changed **in that** the plug-in card is changed for one or more useful channels (23) and during this process the plug-in card (17-5) of another communication network (7) is used.

2. Method according to Claim 1, **characterized in that** the determination of the number of useful channels (21-24) in the individual groups is changed automatically when a predeterminable number of free useful channels of a group is no longer available.

3. Method according to Claim 2, **characterized in that** in each group of useful channels, one free useful channel is always kept available.

4. Method according to at least one of Claims 1 to 3, **characterized in that** the number of useful channels in each group is only redetermined when a call request is present and at least one useful channel is reallocated if no useful channel of the communication network (7, 8) associated with the called communication device (2, 2') is available for the requested connection.

5. Method according to at least one of Claims 1 to 4, **characterized in that** the first communication network is a landline telecommunication network (3, 4) and the further communication networks are mobile radio telecommunication networks (7, 8).

6. Method according to at least one of Claims 1 to 5, **characterized in that** a change of a plug-in card (23) is implemented by programming means **in that**, for each useful channel (21, 22, 23, 24), plug-in cards (17-1, ..., 17-8) of at least two communication networks (7, 8) are reserved and the requested new plug-in card (17-5) is activated but the previous plug-in card (17-6) is deactivated.

7. Gateway which is connected to a first communication network (3, 4) and which administers a first group of a first number (N) of useful channels (21, 22) of a first further communication network (7) and at least one second group of a second number (M) of useful channels (23, 24) of a second further communication network (8), and which exhibits the following:
- means (51) for evaluating information relating to a call request of a calling communication device (1, 1') of the first communication network (3, 4);
- means (10a-10d) for establishing a connection to a called communication device (2, 2') of one of the further communication networks (7, 8) and, for this purpose,
- means (16) of providing a useful channel (21-24) of the corresponding communication network (7, 8) for the requested connection,
**characterized by**
- a plurality of plug-in cards (17-1, ..., 17-8) provided with an identification, a plug-in card specific to a communication network (7, 8) being allocated to each useful channel and plug-in cards of the same communication network (7, 8) being allocated to the useful channels of one group,
- means (51) which dynamically determine the number of useful channels (21-24) in each group, wherein, in the case of a change in the determination, at least one useful channel (23) is taken from one of the groups and allocated to another group and thus to another communication network (7, 8), and wherein
- the determining means (51), for changing the number of useful channels of a group, change the plug-in card for one or more useful channels, a changed plug-in card (23) in each case being allocated to another one of the communication networks (7, 8).

8. Gateway according to Claim 7, **characterized in that** the determining means (51) automatically change the determination of the number of useful channels (21-24) in the individual groups when a predeterminable number of free useful channels of a group is no longer available.

9. Gateway according to Claim 8, **characterized in that** the determining means (51) always keep a free channel available in each group of useful channels.

10. Gateway according to at least one of Claims 7 to 9, **characterized in that** the determining means (51) only redetermine the number of useful channels in each group when a call request is present and during this process reallocate at least one useful channel if no useful channel of the communication network (7, 8) associated with the called communication device (2, 2') is available for the requested connection.

11. Gateway according to at least one of Claims 7 to 10, **characterized in that** the first communication network is a landline telecommunication network (3, 4) and the further communication networks are mobile radio telecommunication networks (7, 8).

12. Gateway according to at least one of Claims 7 to 11, **characterized in that** for each useful channel (21-24) plug-in cards (17-1, ..., 17-8) of at least two communication networks (7, 8) are allocated to the gateway (5) and the determining means (51), in the case of a change in the determination for a useful channel (23) considered, deactivate the currently activated plug-in card (17-6) by programming means and activate another plug-in card (17-5) allocated to the requested communication network (7).

## Revendications

1. Procédé permettant d'établir des connexions entre un appareil de télécommunication appelant (1, 1') d'un premier réseau de télécommunication (3, 4) et un appareil de télécommunication appelé (2, 2') d'un autre réseau de télécommunication (7, 8) à l'aide d'une passerelle (5) qui est reliée au premier réseau de télécommunication (3, 4), moyennant quoi
- la passerelle (5) gère
- un premier groupe d'un premier nombre (N) de canaux utiles (21, 22) d'un premier autre réseau de télécommunication (7) et
- au moins un second groupe d'un second nombre (M) de canaux utiles (23, 24) d'un second autre réseau de télécommunication (8),
- pour la réalisation d'une connexion entre l'appareil de télécommunication appelant et l'appareil de télécommunication appelé, des informations concernant une demande de connexion de la part de l'appareil de télécommunication appelant (1, 1') sont acheminées tout d'abord vers la passerelle (5),
- la passerelle (5) détermine au moyen des informations reçues à quel autre réseau de télécommunication (7, 8) est attribué l'appareil de télécommunication appelé (2, 2'), et
- la passerelle (5) met à disposition un canal utile (21-24) du réseau de communication correspondant (7, 8) pour la connexion,
**caractérisé en ce que**,
- le nombre des canaux utiles (21-24) est déterminé de façon dynamique dans chaque groupe, moyennant quoi, en cas de modification de la détermination, au moins un canal utile (23) d'un des groupes est prélevé et attribué à un autre groupe et donc à un autre réseau de télécommunication (7, 8),
- à cet effet, une carte enfichable (17-1, ...17-8) dotée d'une identification et spécifique à un réseau de télécommunication (7, 8) est fournie pour chaque canal utile (21-24), moyennant quoi des cartes enfichables (17-1, 17-3, 17-6, 17-8) du même réseau de télécommunication (7, 8) sont attribuées aux canaux utiles d'un groupe, et
- une modification du nombre de canaux utiles dans un groupe a lieu dans la mesure où la carte enfichable est remplacée pour un ou plusieurs canaux utiles (23), et la carte enfichable (17-5) d'un autre réseau de télécommunication (7) est utilisée.

2. Procédé selon la revendication 1, **caractérisé en ce qu'**une modification de la détermination du nombre des canaux utiles (21-24) a lieu automatiquement dans les différents groupes, lorsqu'un nombre définissable de canaux utiles libres d'un groupe n'est plus disponible.

3. Procédé selon la revendication 2, **caractérisé en ce que** dans chaque groupe de canaux utiles, un canal utile libre est toujours disponible.

4. Procédé selon au moins une des revendications 1 à 3, **caractérisé en ce que** le nombre de canaux utiles n'est déterminé dans chaque groupe que dès qu'une connexion est demandée, et au moins un canal utile est attribué, dans la mesure où aucun canal utile du réseau de télécommunication (7, 8) appartenant à l'appareil de télécommunication appelé (2, 2') n'est disponible pour la connexion souhaitée.

5. Procédé selon au moins une des revendications 1 à 4, **caractérisé en ce que** le premier réseau de télécommunication est un réseau fixe de télécommunication (3, 4), et les autres réseaux de télécommunication sont des réseaux mobiles de télécommunication (7, 8).

6. Procédé selon au moins une des revendications 1 à 5, **caractérisé en ce qu'**un remplacement d'une carte enfichable (23) est réalisé par programme, en fournissant pour chaque canal utile (21, 22, 23, 24) des cartes enfichables (17-1, ...17-8) d'au moins deux réseaux de télécommunication (7, 8), et la nouvelle carte enfichable souhaitée (17-5) est activée, la carte enfichable (17-6) utilisée jusqu'alors étant en revanche désactivée.

7. Passerelle qui est reliée à un premier réseau de télécommunication (3, 4), et qui gère un premier groupe d'un premier nombre (N) de canaux utiles (21, 22) d'un premier autre réseau de télécommunication (7), et au moins un second groupe d'un second nombre (M) de canaux utiles (23, 24) d'un second autre réseau de télécommunication (8), et qui comprend :
- des moyens (51) d'évaluation des informations concernant une demande de connexion d'un appareil de télécommunication appelant (1, 1') du premier réseau de télécommunication (3, 4) ;
- des moyens (10a-10d) de réalisation d'une connexion avec un appareil de télécommunication appelé (2, 2') d'un des autres réseaux de télécommunication (7, 8) et, à cet effet
- des moyens (16) permettant de fournir un canal utile (21-24) du réseau de télécommunication correspondant (7, 8) pour la connexion souhaitée,
**caractérisée par**
- une pluralité de cartes enfichables (17-1, ...17-8) dotées d'une identification, moyennant quoi une carte enfichable spécifique à un réseau de télécommunication (7, 8) est attribuée à chaque canal utile, et des cartes enfichables de ce même réseau de télécommunication (7, 8) sont attribuées aux canaux utiles d'un groupe,
- des moyens (51) déterminant le nombre de canaux utiles (21-24) de façon dynamique dans chaque groupe, moyennant quoi en cas de modification de la détermination, au moins un canal utile (23) d'un des groupes est prélevé et est attribué à un autre groupe, et donc à un autre réseau de télécommunication (7, 8), et moyennant quoi
- les moyens de détermination (51), en vue de modifier le nombre de canaux utiles d'un groupe, provoquent un remplacement de la carte enfichable pour un ou plusieurs canaux utiles, moyennant quoi une carte enfichable (23) remplacée est attribuée respectivement à un autre des réseaux de télécommunication (7, 8).

8. Passerelle selon la revendication 7, **caractérisée en ce que** les moyens de détermination (51) assurent automatiquement une modification de la détermination du nombre de canaux utiles (21-24) dans les différents groupes, lorsqu'un nombre définissable de canaux utiles libres d'un groupe n'est plus disponible.

9. Passerelle selon la revendication 8, **caractérisée en ce que** les moyens de détermination (51) dans chaque groupe de canaux utiles disposent toujours d'un canal libre.

10. Passerelle selon au moins une des revendications 7 à 9, **caractérisée en ce que** les moyens de détermination (51) ne déterminent à nouveau le nombre de canaux utiles dans chaque groupe, que dès qu'ils sont en présence d'une demande de connexion, et attribuent ainsi au moins un canal utile, au cas où aucun canal utile du réseau de télécommunication (7, 8) appartenant à l'appareil de télécommunication (2, 2') appelé n'est disponible pour la connexion souhaitée.

11. Passerelle selon au moins une des revendications 7 à 10, **caractérisée en ce que** le premier réseau de télécommunication est un réseau fixe de télécommunication (3, 4), et les autres réseaux de télécommunication sont des réseaux mobiles de télécommunication (7, 8).

12. Passerelle selon au moins une des revendications 7 à 11, **caractérisée en ce que** des cartes enfichables (17-1, ...17-8) d'au moins deux réseaux de télécommunication (7, 8) sont attribuées à la passerelle (5) pour chaque canal utile (21-24), et les moyens de détermination (51) désactivent par programme la carte enfichable (17-6) activée jusqu'à présent, lors d'un changement de la détermination pour un canal utile (23) considéré, et activent une autre carte enfichable (17-5) attribuée au réseau de télécommunication souhaité (7).
